# EUROPÄISCHE PATENTANMELDUNG

(11) **EP 3 020 899 A1**
(43) Veröffentlichungstag der Anmeldung: **18.05.2016**
(21) Anmeldenummer: 14193360.6
(22) Anmeldetag: 14.11.2014
(51) Int. Cl.: E05D 15/06

(54) **Rollenwagen für die Aufnahme einer Schiebetür mit einer Zubehörvorrichtung**

(71) Anmelder: DORMA Deutschland GmbH, 58256 Ennepetal (DE)
(72) Erfinder: KREYENBORG, Ralf, 58256 Ennepetal (DE); LIEBSCHER, Arne, 58256 Ennepetal (DE); KLEMENS, Sandra, 58256 Ennepetal (DE); SCHNEIDER, Marc-Andre, 58256 Ennepetal (DE); HÖHER, Ralf, 58256 Ennepetal (DE)
(74) Vertreter: Balder IP Law, S.L.

(57) **Zusammenfassung**

Die Erfindung betrifft einen Rollenwagen (10) für die Aufnahme einer Schiebetür (110), aufweisend ein Rollenmodul (20) zur verschiebbaren Anbringung an einer Rollenlaufbahn (120) und einen Grundkörper (30) zur Befestigung an der Schiebetür (110), wobei der Rollenwagen (10) für die Befestigung eines ersten Zubehörmoduls (300) von wenigstens zwei unterschiedlichen Zubehörmodulen (300) zumindest eine Zubehörvorrichtung (40) aufweist mit einer Anlagefläche (42) zur Kontaktierung einer Gegenanlagefläche (312) des ersten Zubehörmoduls (300) und wenigstens einem Zubehör-Befestigungsmittel (44) für die Befestigung des ersten Zubehörmoduls (300).

## Beschreibung

Die vorliegende Erfindung betrifft einen Rollenwagen für die Aufnahme einer Schiebetür mit einer Zubehörvorrichtung, ein Zubehörmodul zur Befestigung an einer Zubehörvorrichtung eines derartigen Rollenwagens, eine Schiebetürenanlage mit einem entsprechenden Rollenwagen sowie ein Verfahren für die Befestigung eines Zubehörmoduls gemäß der vorliegenden Erfindung.

Es ist grundsätzlich bekannt, dass Rollenwagen eingesetzt werden, um die Funktion von Schiebetüren gewährleisten zu können. Solche Rollenwagen weisen üblicherweise ein Rollenmodul auf, welches verschiebbar in einer Rollenlaufbahn eingesetzt werden kann. Eine solche Rollenlaufbahn ist üblicherweise oberhalb der Türöffnung an der Wand oder der Decke befestigt. Weiter ist ein solcher Rollenwagen üblicherweise mit einer Befestigungsmöglichkeit für die Schiebetür ausgestattet. Üblicherweise sind solche Rollenwagen spezifisch für den jeweiligen Einsatzzweck. So können Schiebetürenanlagen unterschiedlichste technische Funktionen aufweisen. So ist neben der Grundfunktion, nämlich dem Öffnen und dem Schließen der Schiebetür durch eine entsprechende Schiebebewegung, eine Vielzahl von Zusatzfunktionen möglich. Bei den bekannten Schiebetürenanlagen sind dabei die Rollenwagen spezifisch an die jeweilige Zusatzfunktion bzw. die jeweilige Menge an Zusatzfunktionen angepasst. Bei diesen Zusatzfunktionen kann es sich zum Beispiel um automatische Antriebsvorrichtungen für die Durchführung der Schiebebewegung handeln. Auch sind Anschlagsvorrichtungen für das Dämpfen beim Öffnungsvorgang oder beim Schließvorgang denkbar. Auch Sicherheitseinrichtungen, welche ein unerwünschtes Schließen vermeiden, können Teil solcher Zusatzfunktionen sein. Nicht zuletzt kann auch eine Verriegelungsmöglichkeit eine solche Zusatzfunktion ausbilden.

Nachteilhaft bei den bekannten Systemen ist es, dass die Rollenwagen an die jeweilige Zusatzfunktion bzw. die jeweilige Menge von Zusatzfunktionen spezifisch angepasst sein müssen. So ist für jede Kombination von Zusatzfunktionen ein separater Rollenwagen notwendig. Dazu kommt üblicherweise noch eine Verdopplung der Anzahl notwendiger unterschiedlicher Rollenwagen für eine Anbringung linksseitig oder rechtsseitig bei einer entsprechenden Schiebetür. Diese hohe Anzahl unterschiedlicher Rollwagen führt dazu, dass eine hohe Gesamtkomplexität entsteht, welche sich wiederum in hohen Fertigungskosten und hohen Preisen für die einzelnen Rollenwagen niederschlägt. Darüber hinaus wird die Flexibilität des Einsatzes von derart spezifisch ausgebildeten Rollenwagen deutlich reduziert.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Komplexität eines derartigen Systems zu reduzieren und insbesondere die Einsatzflexibilität einzelner Rollenwagen zu erhöhen.

Voranstehende Aufgabe wird gelöst durch einen Rollenwagen mit den Merkmalen des Anspruchs 1, ein Zubehörmodul mit den Merkmalen des Anspruchs 10, eine Schiebetürenanlage mit den Merkmalen des Anspruchs 12 sowie ein Verfahren mit den Merkmalen des Anspruchs 14. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Rollenwagen beschrieben sind, selbstverständlich auch im Zusammenhang mit dem erfindungsgemäßen Zubehörmodul, der erfindungsgemäßen Schiebetürenanlage sowie dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Ein erfindungsgemäßer Rollenwagen dient der Aufnahme einer Schiebetür. Hierfür weist der Rollenwagen ein Rollenmodul zur verschiebbaren Anbringung an einer Rollenlaufbahn auf. Darüber hinaus ist ein Grundkörper vorgesehen für eine Befestigung an der Schiebetür. Ein erfindungsgemäßer Rollenwagen zeichnet sich dadurch aus, dass dieser Rollenwagen für die Befestigung eines ersten Zubehörmoduls von wenigstens zwei unterschiedlichen Zubehörmodulen zumindest eine Zubehörvorrichtung aufweist. Diese Zubehörvorrichtung ist mit einer Anlagefläche ausgestattet zur Kontaktierung einer Gegenanlagefläche des ersten Zubehörmoduls. Darüber hinaus ist wenigstens ein Zubehör-Befestigungsmittel vorgesehen für die Befestigung des ersten Zubehörmoduls.

Ein erfindungsgemäßer Rollenwagen weist insbesondere zumindest zwei Bauteile, nämlich das Rollenmodul und den Grundkörper auf. Dabei können selbstverständlich auch weitere Bauteile vorgesehen sein und/oder diese beiden Bauteile aus einzelnen Körpern zusammengesetzt sein. Ein Rollenwagen ist im Sinne der vorliegenden Erfindung ein Gesamtsystem, welches zumindest zwei Funktionen erfüllt. So ist zum einen durch das Rollenmodul die verschiebbare Anbringung auf der Rollenlaufbahn möglich. Auch wenn bereits hier die Begrifflichkeit von Rollen verwendet wird, so ist eine Anbringung von Lagervorrichtungen von Rollen nur eine Möglichkeit der Ausführung eines erfindungsgemäßen Rollenwagens. Selbstverständlich kann ein solcher Rollenwagen für die verschiebbare Lagerung auch eine Linearführung, zum Beispiel eine Gleitlagerung oder einen Linearantrieb aufweisen. Hinsichtlich reduzierter Komplexität und verminderten Kosten ist jedoch die Ausbildung durch rotierbare Rollen für eine solche Lagervorrichtung bevorzugt. Als zweite Funktion wird die Befestigung der Schiebetür zur Verfügung gestellt. Dabei kann es sich zum Beispiel um eine klemmende Befestigung handeln.

Das Rollenmodul und der Grundkörper sind dabei erfindungsgemäß separate Bauteile bzw. separate Körper. Jedes dieser beiden Bauteile, also das Rollenmodul und/oder der Grundkörper können dabei selbst eine Vielzahl von Einzelteilen aufweisen, die miteinander verbunden sind. So kann das Rollenmodul zum Beispiel entsprechende Lagervorrichtungen in Form von rotierbar gelagerten Rollen aufweisen. Der Grundkörper kann eine Vielzahl von Einzelbauteilen aufweisen, wie zum Beispiel weitere Vorrichtungen für Zusatzfunktionen. Dies kann neben einer Höhenverstellvorrichtung auch eine Sicherungsvorrichtung, eine Fixiervorrichtung oder auch eine Klemmvorrichtung sein, mittels welcher die Schiebetür an dem Grundkörper befestigbar ist.

Grundsätzlich ist die Richtung der Bewegung mittels des Rollenwagens erfindungsgemäß offen. So kann hier eine Bewegung entlang einer Geraden genauso durchgeführt werden, wie eine Bewegung entlang einer gekrümmten oder mehrfach gekrümmten Bewegungslinie im Rahmen der vorliegenden Erfindung denkbar ist.

Eine verschiebbare Anbringung an einer Rollenlaufbahn ist dabei spezifisch für die jeweilige Ausführungsform der Lagerung zu verstehen. Sind beispielsweise Lagervorrichtungen in Form von einzelnen Rollen vorgesehen, so werden diese Rollen in eine entsprechende Rollenlaufbahn eingesetzt. Ist beispielsweise eine Gleitlagerung vorgesehen, so erfolgt ein Anbringen des Rollenmoduls auf einer entsprechenden Gleitschiene bzw. an einer entsprechenden Gleitschiene.

Das Rollenmodul ist vorzugsweise aus einem Stahlgussmaterial hergestellt. Der Grundkörper kann leichter, zum Beispiel aus Leichtmetalldruckguss gefertigt sein. Insbesondere kommen hier Aluminium oder Zink als Leichtmetallgussmittel zum Einsatz.

Erfindungsgemäß wird also ein einziger Rollenwagen vorgesehen, welcher auch als Basisrollenwagen bezeichenbar ist. Ein solcher Basisrollenwagen kann nun durch entsprechende Zubehörmodule spezifiziert werden und damit spezifisch auf ein oder mehrere Zusatzfunktionen durch entsprechende Zubehörmodule nachgerüstet oder aufgerüstet werden. Unter der Begrifflichkeit eines Zubehörmoduls ist dabei im Sinne der vorliegenden Erfindung eine technische Einrichtung zu verstehen, welche in der Lage ist zumindest eine oder mehrere Funktionen für den Rollenwagen zumindest teilweise zu erfüllen. Wird beispielsweise eine Verriegelungsfunktion in einer der Endpositionen des Rollenwagens gewünscht, so kann ein solches Zubehörmodul einen entsprechenden Riegelabschnitt aufweisen, welcher in einer Verriegelungsvorrichtung stationär an einer Endposition der Schiebetür einrasten kann. Für andere Funktionen können dementsprechend andere Funktionsabschnitte der Zubehörmodule vorgesehen werden. Erfindungsgemäß bildet der Rollenwagen nun die Grundfunktionen aus, welche grundsätzlich für alle Einsatzsituationen zur Verfügung gestellt werden sollen. Darunter ist insbesondere die verschiebbare Anbringung an der Rollenlaufbahn sowie die Befestigung der Schiebetür zu verstehen. Die Anbringung auf der Rollenbahn erlaubt die verschiebbare Bewegung des Rollenmoduls und damit des Rollenwagens entlang dieser Rollenlaufbahn. Die Befestigung der Schiebetür erlaubt es für diese Bewegung nun die Schiebetür zu befestigen, um damit gemeinsam mit dem Rollenwagen auch die Schiebetür hinsichtlich einer Öffnungsbewegung und einer Schließbewegung bewegen zu können.

Wird nun eine oder mehrere Zusatzfunktionen gewünscht, so stehen der Person bei der Montage am Montageort unterschiedliche Zubehörmodule zur Verfügung. Dabei sind die unterschiedlichen Zubehörmodule insbesondere jeweils spezifisch auf genau eine oder mehrere Zusatzfunktionen ausgerichtet. Wird also eine definierte spezifische Zusatzfunktion gewünscht, wird das dazugehörige korrelierende spezifische Zubehörmodul als erstes Zubehörmodul ausgewählt. Durch die erfindungsgemäße Ausbildung einer Zubehörvorrichtung ist diese sozusagen als universelle Zubehörschnittstelle ausgebildet. Durch diese universelle Ausbildung der Zubehörvorrichtung, welche insbesondere durch die universelle Korrelation und Ausbildung der Anlagefläche sowie der Zubehör-Befestigungsmittel zum Ausdruck kommt, wird es nun möglich grundsätzlich zwei oder mehr unterschiedliche Zubehörmodule an der Zubehörvorrichtung zu befestigen. Selbstverständlich ist bei einer Zubehörvorrichtung insbesondere nur ein einziges Zubehörmodul zur gleichen Zeit befestigbar. Welches der unterschiedlichen Zubehörmodule als dieses erste Zubehörmodul jedoch befestigt werden soll, ist frei auswählbar.

Wie aus der voranstehenden Erläuterung ersichtlich wird, wird die Flexibilität für eine Basisausführung eines erfindungsgemäßen Rollenwagens signifikant erhöht. So können insbesondere sämtliche Zubehörfunktionen durch ein entsprechendes Befestigen des entsprechend spezifischen Zubehörmoduls an der Zubehörvorrichtung eine Aufrüstung dieses Rollenwagens bieten. Damit kann ein einziger universeller Rollenwagen zur Verfügung gestellt werden, welcher bei reduzierter Komplexität beliebig viele unterschiedliche Zusatzfunktionen erfüllen kann. Dabei kann es von Vorteil sein, wenn ein oder mehrere Zubehörvorrichtungen vorgesehen sind, so dass auch zwei oder mehr Zubehörmodule parallel und damit gleichzeitig am Rollenwagen befestigt werden können. Während für unterschiedliche Kombinationen von Zusatzfunktionen gemäß dem Stand der Technik unterschiedliche spezifische Rollenwagen notwendig waren, ist nunmehr ein universeller Rollenwagen aufrüstbar durch die entsprechenden spezifischen Zusatzmodule. Die Komplexität unterschiedlicher Zusatzfunktionen wird dabei auf spezifische Zubehörmodule reduziert, welche aufgrund ihrer Abmessung und Komplexität mit deutlich reduziertem Aufwand und Kosten herstellbar werden. Ein weiterer entscheidender Vorteil ist, dass durch die Basisausbildung und die universelle Schnittstellenfunktion der Zubehörvorrichtung ein solcher Rollenwagen im Wesentlichen frei mit unterschiedlichen Zubehörmodulen kombinierbar ist, so dass selbst auf Basis von spezifischen Zubehörmodulen die Komplexität hinsichtlich einer freien Kombinierbarkeit unterschiedlicher Zusatzfunktionen in einem Rollenwagen deutlich reduziert worden ist.

Weiter ist es denkbar, dass die Anlageflächen gemäß der vorliegenden Erfindung komplett frei ausbildbar sind. So können die Anlagefläche und die Gegenanlagefläche ebene oder zumindest teilweise ebene Erstreckungen aufweisen. Auch unterschiedlich ausgerichtete ebene Abschnitte der Anlagefläche und der Gegenanlagefläche sind im Sinne der vorliegenden Erfindung denkbar. Auch können komplett frei geformte Anlageflächen oder Gegenanlageflächen zum Einsatz kommen, wie auch gekrümmte Ausbildungen dieser Flächen. So kann zum Beispiel ein zumindest teilweiser Formschluss erzeugt werden, wie er später noch erläutert wird.

Unter Zubehör-Befestigungsmitteln sind Bauteile zu verstehen, welche der befestigenden Anordnung des Zubehörmoduls dienen. Hier können reversibel oder irreversibel wirkende Zubehör-Befestigungsmittel eingesetzt werden. So sind beispielsweise Gewindelöcher mit einer entsprechenden Gewindeschraube als Zubehör-Befestigungsmittel einsetzbar. Auch irreversible Lösungen, wie ein Vernieten oder ein zumindest teilweises Verkleben, sind im Sinne der vorliegenden Erfindung als Zubehör-Befestigungsmittel möglich.

Es kann von Vorteil sein, wenn bei einem erfindungsgemäßen Rollenwagen die Zubehörvorrichtung als Teil des Grundkörpers ausgebildet ist, insbesondere die Oberfläche des Grundkörpers in einem Abschnitt die Anlagefläche aufweist. Dies führt zu einer weiteren Reduktion der Komplexität. Insbesondere, wenn der Rollenwagen mit einer Höhenverstellvorrichtung ausgestattet ist, kann die Korrelation der Zubehörvorrichtung mit dem Grundkörper Vorteile mit sich bringen. So wird damit automatisch mit einer Höhenverstellung des Grundkörpers und damit auch der Schiebetür das Zubehörmodul gleichzeitig auf die gleiche Höhe justiert. In Korrelation mit feststehenden Bauteilen separat vom Rollenwagen, welche mit dem Zubehörmodul zusammenwirken sollen, führt dies sozusagen automatisch zu einer parallelen Justiermöglichkeit auch für diese Zubehörmodule. Die Komplexität und die Größe des Rollenmoduls bzw. des Grundkörpers und damit des gesamten Rollenwagens wird auf diese Weise ebenfalls reduziert. Dabei kann der Grundkörper selbstverständlich mehrere Bauteile aufweisen oder integral und damit monolithisch mit der entsprechenden Anlagefläche zur Verfügung gestellt werden.

Vorteilhaft ist es ebenfalls, wenn bei einem erfindungsgemäßen Rollenwagen der Rollenwagen zumindest zwei Zubehörvorrichtungen aufweist, welche symmetrisch oder im Wesentlichen symmetrisch zueinander angeordnet sind. Eine symmetrische Anordnung erlaubt es nun, linksseitig und rechtsseitig den gleichen universellen Rollenwagen einzusetzen. So kann dementsprechend das Zubehörmodul hinsichtlich der Montageposition frei ausgewählt werden, ob es sich bei dem Rollenwagen um eine linksseitige Anordnung oder eine rechtsseitige Anordnung handelt. Durch diese symmetrische Ausbildung von zumindest zwei Zubehörvorrichtungen wird die notwendige Anzahl von universellen Rollenwagen nochmals halbiert, da für eine linksseitige wie rechtsseitige Anordnung der gleiche Rollenwagen grundsätzlich einsetzbar ist. Die Spezifizierung hinsichtlich einer linksseitigen oder einer rechtsseitigen Anbringung des Rollenwagens erfolgt durch die entsprechende Auswahl einer der beiden Zubehörvorrichtungen für die entsprechende Montage des zugehörigen Zubehörmoduls. Dies führt neben der Reduktion der Komplexität zu einer Erhöhung der möglichen Stückzahl solcher universeller Rollenwagen und damit zu einer Reduktion der Stückkosten. Die beschriebene Symmetrie bezieht sich dabei insbesondere auf eine Ebene, auf welcher die Schieberichtung des Rollenwagens senkrecht oder im Wesentlichen senkrecht steht.

Vorteilhaft ist es weiter, wenn bei einem erfindungsgemäßen Rollenwagen dieser Rollenwagen zumindest zwei Zubehörvorrichtungen aufweist, deren Zubehör-Befestigungsmittel in einem identischen oder im Wesentlichen identischen Raster angeordnet sind. So sind Zubehör-Befestigungsmittel zum Beispiel in Form von Löchern, Bolzen, Schrauben oder Gewindestiften denkbar. Da häufig pro Zubehörvorrichtung zwei oder mehr solcher Zubehör-Befestigungsmittel notwendig sind, kann ein Raster ausgebildet werden, welches vorzugsweise bei zwei, insbesondere bei allen Zubehörvorrichtungen identisch ausgebildet ist. Dies führt dazu, dass das jeweils spezifisch ausgewählte erste Zubehörmodul frei an jeder dieser Zubehörvorrichtungen montierbar ist. Ein solches Raster kann darüber hinaus die Funktion aufweisen, die Ausrichtung des Zubehörmoduls vorzugeben. Dies reduziert den Montageaufwand und die Unsicherheit hinsichtlich der Montageausrichtung deutlich. Darüber hinaus wird die Komplexität des Gesamtsystems auf diese Weise noch weiter reduziert. Die Rasterausbildung, insbesondere hinsichtlich von Montageachsen von entsprechenden Löchern, Bolzen oder Gewindeschrauben, ist insbesondere parallel oder im Wesentlichen parallel zu Rotationsachsen von Rollen einer Lagervorrichtung des Rollenmoduls ausgebildet. Die einzelnen Achsen, Rotationsachsen, Bewegungsachsen oder Translationsachsen, der Zubehör-Befestigungsmittel sind dabei vorzugsweise alle oder im Wesentlichen alle parallel zueinander. Auch dies führt zu einer Reduktion der zugehörigen Montagekomplexität.

Vorteilhaft ist es weiter, wenn bei einem erfindungsgemäßen Rollenwagen der Rollenwagen zumindest zwei Zubehörvorrichtungen aufweist, deren Zubehör-Befestigungsmittel eine identische oder eine im Wesentlichen identische Befestigungsfunktion aufweisen. Unter einer Befestigungsfunktion ist dabei insbesondere eine Unterscheidung zu verstehen, ob es sich um einen Formschluss, einen Reibschluss und/oder einen Kraftschluss handelt. Dabei kann auch eine Kombination von zwei oder mehr unterschiedlichen Befestigungsfunktionen vorgesehen werden. Sind alle Zubehör-Befestigungsmittel aller Zubehörvorrichtungen im Wesentlichen identisch hinsichtlich ihrer Befestigungsfunktion ausgebildet, reduziert dies ebenfalls die Montagekomplexität sowie den entsprechenden Montageaufwand. Beispielsweise können bei der Ausbildung der Zubehör-Befestigungsmittel mit Gewinden sämtliche Gewinde mit der gleichen Gewinderichtung und gleicher Gewindesteigung ausgebildet werden. Weisen die Zubehör-Befestigungsmittel Handhabungsschnittstellen auf, so sind vorzugsweise alle Zubehör-Befestigungsmittel mit der identischen oder im Wesentlichen identischen Handhabungsschnittstelle ausgestattet. So kann ein und dasselbe Montagewerkzeug für alle Zubehörvorrichtungen eingesetzt werden.

Vorteilhaft ist es ebenfalls, wenn bei einem erfindungsgemäßen Rollenwagen die Zubehör-Befestigungsmittel Langlöcher aufweisen, deren Erstreckung insbesondere entlang einer Schwerkraftrichtung ausgebildet ist. Eine Schwerkraftrichtung bezieht sich dabei auf die Montagesituation des Rollenwagens und ist von oben nach unten auf den Boden unterhalb des Rollenwagens zugerichtet. Solche Langlöcher erlauben es nun, insbesondere im Zusammenwirken mit entsprechenden Gewindeschrauben oder Gewindebolzen, eine Höhenverstellung des Zubehörmoduls zu ermöglichen. Im Gegensatz bzw. zusätzlich zu einer grundsätzlich vorhandenen Höhenverstellvorrichtung eines Grundkörpers bzw. Rollenmoduls kann hier eine zusätzliche Relativverschiebung des angeordneten Zubehörmoduls zum Rollenmodul und/oder zum Grundkörper erfolgen. Dies erlaubt es durch quer verlaufende Langlöcher, in Schwerkraftrichtung verlaufende Langlöcher oder durch schräge bzw. in Kreuzform angeordnete Löcher eine erhöhte Flexibilität hinsichtlich der Ausrichtung des Zubehörmoduls zur Verfügung zu stellen.

Vorteilhaft ist es weiter, wenn bei einem erfindungsgemäßen Rollenwagen die Anlagefläche zumindest abschnittsweise für einen Formschluss mit der Gegenanlagefläche ausgebildet ist. Ein Formschluss führt zusätzlich zur Befestigungsunterstützung, da hier eine verbesserte Kraftübertragung möglich ist. So kann ein solcher Formschluss zwischen Anlagefläche und Gegenanlagefläche die Zubehör-Befestigungsmittel unterstützen oder sogar teilweise mit ausbilden. Damit bildet der Formschluss sozusagen einen Teil der Befestigungsfunktion aus. Insbesondere sind dabei unterschiedlich ausgerichtete Flächen bzw. Ebenen vorgesehen, um damit die gewünschte oder notwendige Ausrichtung des Zubehörmoduls relativ zu den restlichen Bauteilen des Rollenwagens in erleichterter Weise zu gewährleisten. Auch kann auf diese Weise eine spezifische Anordnung und damit eine automatische Auswahl auf ausschließlich entsprechend passende Zubehörmodule erfolgen. Damit kann die Sicherheit bei der Montage hinsichtlich der Richtigkeit der Auswahl des Zubehörmoduls erhöht werden.

Ebenfalls von Vorteil ist es, wenn bei einem erfindungsgemäßen Rollenwagen die zumindest eine Zubehörvorrichtung ausgebildet ist für die Befestigung eines Zubehörmoduls gemäß der vorliegenden Erfindung. Insbesondere ist ein entsprechendes erstes Zubehörmodul an der Zubehörvorrichtung von wenigstens zwei unterschiedlichen Zubehörmodulen befestigt. Damit bildet ein solcher Rollenwagen im Zusammenspiel mit einem solchen Zubehörmodul ein System aus, welches den grundsätzlich universellen Rollenwagen mit seiner universellen Schnittstelle in Form der Zubehörvorrichtung spezifiziert hat. Bei der Kombination mit zumindest einem ersten Zubehörmodul handelt es sich also um die Einsatzsituation eines solchen Rollenwagens.

Ebenfalls Gegenstand der vorliegenden Erfindung ist ein Zubehörmodul zur Befestigung an einer Zubehörvorrichtung eines Rollenwagens, insbesondere gemäß der vorliegenden Erfindung. Ein solches Zubehörmodul weist einen Modulkörper mit einer Gegenanlagefläche zur Kontaktierung einer Anlagefläche der Zubehörvorrichtung auf. Dies ermöglicht die Kontaktierung von Gegenanlageflächen von wenigstens zwei unterschiedlichen solcher Zubehörmodule, so dass anschließend eine Befestigung mittels wenigstens eines Zubehör-Befestigungsmittels möglich wird. Ein solches Zubehörmodul bildet damit die komplementäre Komponente für den Systemgedanken zu einem universellen erfindungsgemäßen Rollenwagen aus. Damit bringt ein erfindungsgemäßes Zubehörmodul die gleichen Vorteile mit sich, wie sie ausführlich mit Bezug auf einen erfindungsgemäßen Rollenwagen erläutert worden sind.

Ein erfindungsgemäßes Zubehörmodul lässt sich dahingehend weiterbilden, dass der Modulkörper wenigstens einen Funktionsabschnitt für die Ausübung zumindest einer der folgenden Funktionen aufweist:
- Umlenk- und/oder Spannfunktion eines Antriebs des Rollenwagens
- Rastmöglichkeit in einer Endposition des Rollenwagens
- Befestigung eines Selbstschließmechanismus
- in den Rollenwagen integrierte Verriegelungsfunktion
- Positionsbestimmung des Rollenwagens
- Befestigung einer mitfahrenden Sichtblende

Bei der voranstehenden Aufzählung handelt es sich um eine nicht abschließende Liste. Solche Zubehörmodule können in einem Zubehörgeschäft oder Nachrüstbereich zur Verfügung gestellt werden. So ist ein solches Zubehörmodul dementsprechend auch einzeln als Produkt verkaufbar. Unter einer Umlenk- oder Spannfunktion ist dabei zum Beispiel ein Seilantrieb für den Rollenwagen zu verstehen, welcher an dem Rollenwagen mit entsprechenden Zubehörmodulen befestigt wird. Eine Rastmöglichkeit erlaubt es, den Rollenwagen in zumindest einer Endposition temporär zu befestigen. Ein Selbstschließmechanismus erlaubt es, ein automatisches Schließen nach einem Öffnungsvorgang für einen solchen Rollenwagen zur Verfügung zu stellen. Eine integrierte Verriegelungsfunktion ermöglicht es, eine solche Schiebetürenanlage gegen unerwünschtes Öffnen zu schützen. Nicht zuletzt erlaubt eine Positionsbestimmung des Rollenwagens insbesondere eine Erkennung der aktuellen Positionssituation des Rollenwagens bzw. der Schließposition der Schiebetür selbst.

Ein weiterer Gegenstand der vorliegenden Erfindung ist eine Schiebetürenanlage, aufweisend eine Rollenlaufbahn und wenigstens einen in der Rollenlaufbahn verschiebbar gelagerten Rollenwagen gemäß der vorliegenden Erfindung. Insbesondere sind zumindest zwei Rollenwagen vorgesehen, welche eine Schiebetür verschiebbar in der Rollenlaufbahn lagern. Damit bringt eine erfindungsgemäße Schiebetürenanlage die gleichen Vorteile mit sich, wie sie ausführlich mit Bezug auf einen erfindungsgemäßen Rollenwagen erläutert worden sind.

Ein weiterer Gegenstand der vorliegenden Erfindung ist ein Verfahren für die Befestigung eines Zubehörmoduls, insbesondere gemäß der vorliegenden Erfindung, an einem Rollenwagen, insbesondere gemäß der vorliegenden Erfindung, aufweisend die folgenden Schritte.
- Auswählen eines Zubehörmoduls aus wenigstens zwei unterschiedlichen Zubehörmodulen zur Befestigung am Rollenwagen,
- Kontaktieren einer Anlagefläche einer Zubehörvorrichtung des Rollenwagens mit einer Gegenanlagefläche des ausgewählten Zubehörmoduls,
- Befestigen des ausgewählten Zubehörmoduls mittels wenigstens einem Zubehör-Befestigungsmittel der Zubehörvorrichtung.

Dabei kann selbstverständlich der Schritt der Auswahl manuell an der jeweiligen Montagesituation erfolgen. So sind unterschiedliche Zubehörfunktionen spezifisch durch unterschiedliche Zubehörmodule einsetzbar, so dass je nach gewünschter Zubehörfunktion das zugehörige spezifische Zubehörmodul ausgewählt wird. Durch den Einsatz eines erfindungsgemäßen Rollenwagens bzw. eines entsprechenden Zubehörmoduls bringt ein solches Verfahren die gleichen Vorteile mit sich, wie sie ausführlich mit Bezug auf einen erfindungsgemäßen Rollenwagen bereits erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform eines Rollenwagens,
- Fig. 2: eine Ausführungsform einer Schiebetürenanlage,
- Fig. 3: eine seitliche Darstellung eines Rollenwagens in einer Rollenlaufbahn,
- Fig. 4: eine seitliche Darstellung eines Rollenwagens im Querschnitt,
- Fig. 5: die Darstellung der Fig. 4 in isometrischer Schnittansicht,
- Fig. 6: eine frontseitige Ansicht eines Rollenwagens,
- Fig. 7: einen Auswahlschritt vor der Montage eines Zubehörmoduls und
- Fig. 8: die Situation gemäß Fig. 7 nach der Montage eines ausgewählten ersten Zubehörmoduls.

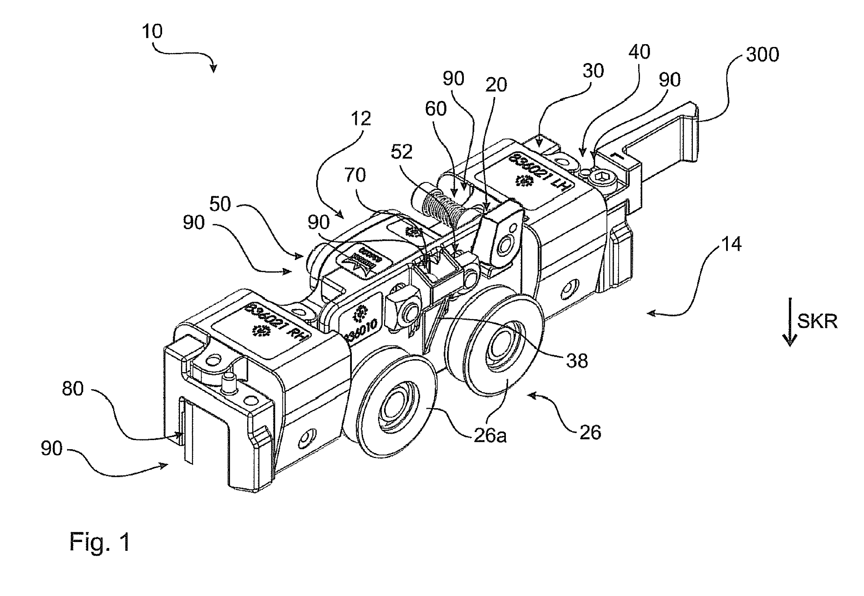

In Fig. 1 ist in isometrischer Darstellung eine Ausführungsform eines Rollenwagens 10 dargestellt. Dieser weist zwei grundsätzliche Bauteile auf. Dabei handelt es sich zum einen um das Rollenmodul 20 und zum anderen um den Grundkörper 30. Beide Bauteile, also Rollenmodul 20 und Grundkörper 30 weisen dabei eine Vielzahl unterschiedlicher Einzelteile auf. Diese Einzelteile werden im Nachfolgenden kurz erläutert.

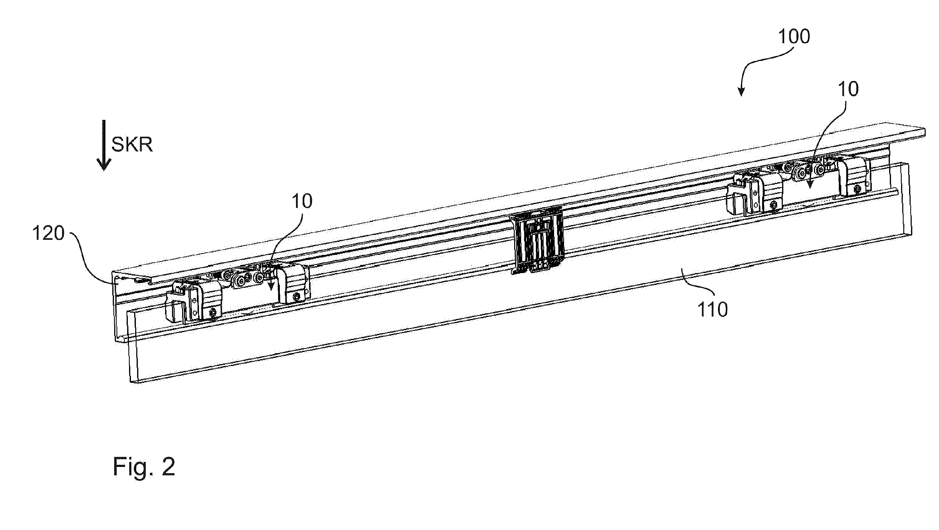

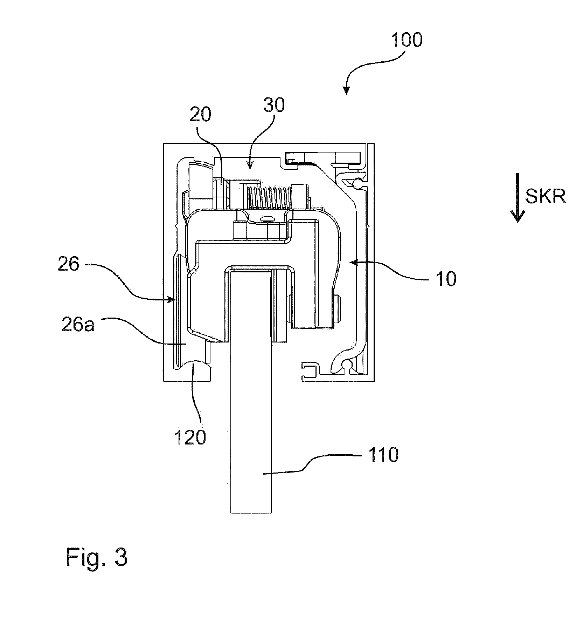

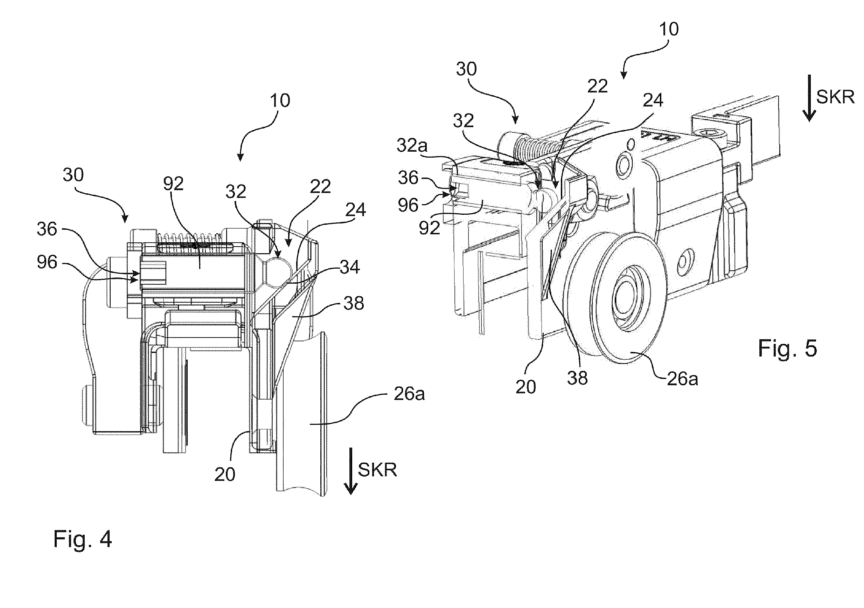

Das Rollenmodul 20 ist hier mit einer Lagervorrichtung 26 ausgestattet. Diese Lagervorrichtung 26 ist hier in Form von zwei Rollen 26a ausgestattet, welche rotierbar an einem Basiskörper des Rollenmoduls 20 gelagert sind. Diese Rollen 26a können nun auf bzw. in einer Rollenlaufbahn 120 eingesetzt werden, wie in der Fig. 2 und der Fig. 3 gut zu erkennen ist. Weiter ist am Rollenmodul 20 ein Teil einer Höhenverstellvorrichtung 70 zur Verfügung gestellt. Die detaillierten Bestandteile dieser Höhenverstellvorrichtung 70 sind insbesondere in den Fig. 4 und 5 dargestellt. So ist hier ein erstes Verstellmittel 32 vorgesehen, welches mithilfe einer Handhabungsschnittstelle 36 eine Verstellbewegung durchführen kann. Da hier das erste Verstellmittel 36 als Gewindeschraube in einem Verstellgewinde 32a ausgebildet ist, erfolgt an der Handhabungsschnittstelle 36 eine Rotationsbewegung, welche gleichzeitig eine lineare Translationsbewegung des ersten Verstellmittels 32 erzeugt. Über einen entsprechenden Kontaktabschnitt 34 steht das erste Verstellmittel 32 in Wirkverbindung mit einem Gegenkontaktabschnitt 24 des zweiten Verstellmittels 22 des Rollenmoduls 20. Die explizite Wirkung dieser Verstellvorrichtung ist dabei ein Umsetzen der Verstellbewegung in eine Justierbewegung entlang der Schwerkraftrichtung SKR.

Wie aus der Fig. 1 zu erkennen ist, ist der Rollenwagen 10 mit einer Mehrzahl unterschiedlicher Montagevorrichtungen 90 ausgestattet, welche unterschiedliche Montagefunktionen zur Verfügung stellen können. Die bereits beschriebene Justierfunktion der Höhe der Schiebetür 110 wird dabei durch die Montagevorrichtung 90 in Form der Höhenverstellvorrichtung 70 zur Verfügung gestellt. Weiter ist eine Montagevorrichtung 90 in Form einer Sicherungsvorrichtung 50 vorgesehen, welche nach erfolgter Justierung der Höhe der Schiebetür 110 eine klemmende Fixierung zwischen Grundkörper 30 und Rollenmodul 20 zur Verfügung stellt.

Eine weitere Montagevorrichtung 90 ist hier eine Zubehörvorrichtung 40, welche durch eine entsprechende Schnittstelle und ein angebrachtes Zubehörmodul 300 zur Verfügung gestellt ist. Darüber hinaus ist eine Aushebeschutzvorrichtung 60 als Montagevorrichtung 90 vorgesehen, welche einen Aushebeschutz gegen unerwünschtes Verlassen des Rollenwagens 10 der in der Rollenlaufbahn 120 eingesetzten Position zur Verfügung stellt. Weiter ist eine Befestigungsvorrichtung 80 als Glasklemme für eine Montagevorrichtung 90 vorgesehen, um die Schiebetür 110 in klemmender Weise zu befestigen.

Allen Montagevorrichtungen ist es gemeinsam, dass sie zumindest ein Montagemittel 92 aufweisen, um eine entsprechende Montagebewegung durchführen zu können. Darüber hinaus ist eine Handhabungsschnittstelle vorgesehen, um genau diese Montagebewegung mit dem Montagemittel auch durchführen zu können.

Wie der Fig. 1 darüber hinaus zu entnehmen ist, weist der Rollenwagen 10 unterschiedliche Seiten auf, nämlich die erste Seite 12 und die zweite Seite 14. Alle Montagevorrichtungen sind dabei hinsichtlich ihrer Handhabungsschnittstelle 96 vorzugsweise von der gleichen Seite, nämlich der ersten Seite 12 entgegengesetzt zur zweiten Seite 14, auf welcher die Lagervorrichtung 26 angeordnet ist, ausgerichtet. Dies ermöglicht einen deutlich erleichterten Zugang.

In Fig. 2 ist dargestellt, wie eine Schiebetür 110 von zwei Rollenwagen 10 gemäß der Fig. 1 gehalten wird und diese beiden Rollenwagen 10 bereits in der Rollenlaufbahn 120 eingesetzt sind. In einer seitlichen Darstellung gemäß Fig. 3 ist insbesondere die Korrelation der Rollen 26a mit der Rollenlaufbahn 120 gut zu erkennen.

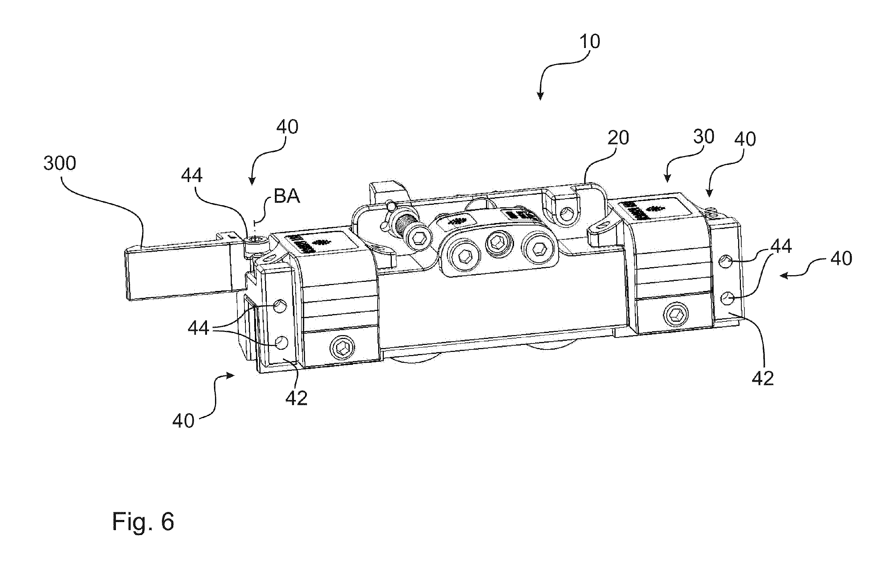

In Fig. 6 ist nun dargestellt, wie die Korrelation zwischen Grundkörper 30 und Rollenmodul 20 in einer frontseitigen Ansicht wirkt. So sind hier insgesamt drei Zubehörvorrichtungen 40 vorgesehen, welche symmetrisch zur Mittenebene des gesamten Rollenwagens 10 ausgebildet sind. Eine linke und eine rechte Zubehörvorrichtung 40 weisen im gleichen Raster angeordnete Zubehör-Befestigungsmittel 44 in Form von jeweils zwei Löchern auf. Eine ebene Anlagefläche 42 ist ebenfalls beidseitig für jede Zubehörvorrichtung 40 vorgesehen. Auch von der Oberseite sind jeweils links und rechts symmetrisch angeordnet eine Zubehörvorrichtung 40 vorgesehen, wobei am linken Ende ein Zubehörmodul 300 für eine entsprechend integrierte Verriegelungs- bzw. Rastfunktion bereits befestigt ist. Diese Befestigung erfolgt mithilfe eines Zubehör-Befestigungsmittels 44 in Form einer Gewindeschraube, welche um eine Bewegungsachse BA rotierbar einschraubbar ist.

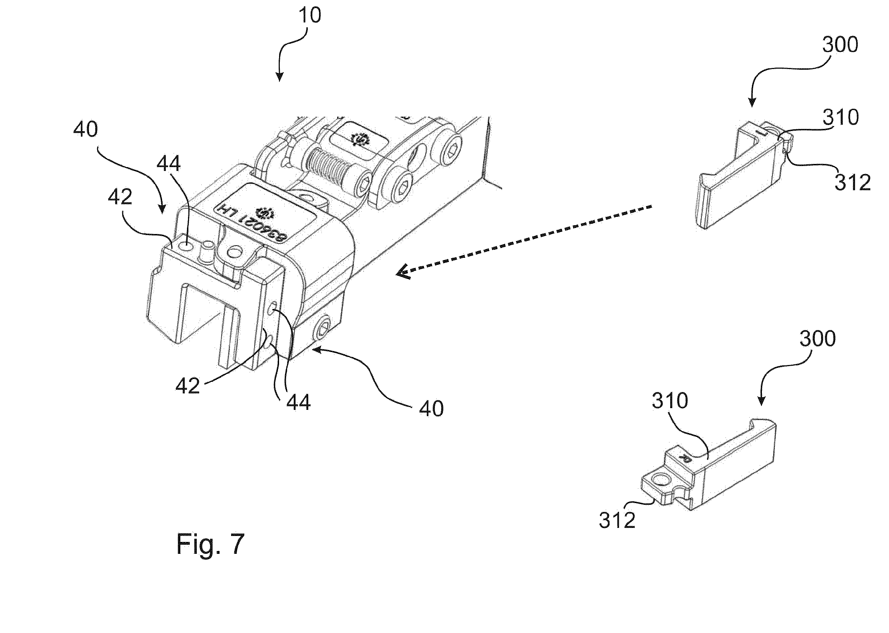

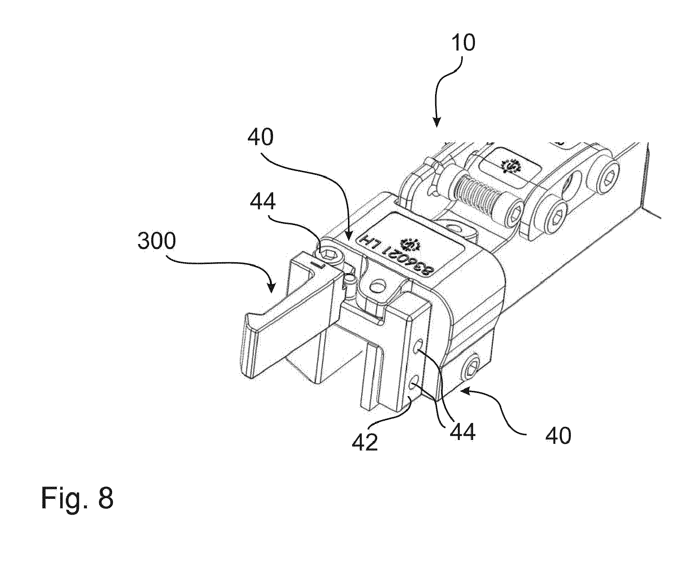

Die Fig. 7 und 8 zeigen, wie ein erfindungsgemäßes Verfahren durchgeführt werden kann. So ist ein Rollenwagen 10 in seiner Basisfunktion und Basisausstattung dargestellt. Hier ist das linke Ende abgebildet, an welchem zwei unterschiedliche Zubehörvorrichtungen 40 vorgesehen sind. An der oben angeordneten Zubehörvorrichtung 40 ist nun ebenfalls die Anlagefläche 42 sowie das Zubehör-Befestigungsmittel 44 in Form einer Gewindeaufnahme zu erkennen. Rechts ist in Fig. 7 eine Auswahl von zwei unterschiedlichen Zubehörmodulen 300 zu erkennen, welche hinsichtlich ihrer Ausrichtung mit R und L für rechts und links gekennzeichnet sind. Dabei wird hier für eine linksseitige Anordnung des Rollenwagens 10 das obere Zubehörmodul 300 mit der Bezeichnung L ausgewählt. Anschließend erfolgt die Montage an der zugehörigen linken Zubehörvorrichtung 40, so dass sich die montierte Situation gemäß Fig. 8 ergibt. Diese entspricht im Wesentlichen der Darstellung gemäß Fig. 6.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Rollenwagen
- 12: erste Seite
- 14: zweite Seite
- 20: Rollenmodul
- 22: zweites Verstellmittel
- 24: Gegenkontaktabschnitt
- 26: Lagervorrichtung
- 26a: Rolle
- 30: Grundkörper
- 32: erstes Verstellmittel
- 32a: Verstellgewinde
- 34: Kontaktabschnitt
- 36: Handhabungsschnittstelle
- 38: Verstärkungsrippe
- 40: Zubehörvorrichtung
- 42: Anlagefläche
- 44: Zubehör-Befestigungsmittel
- 50: Sicherungsvorrichtung
- 52: Anschlagsvorrichtung
- 60: Aushebeschutzvorrichtung
- 70: Höhenverstellvorrichtung
- 80: Befestigungsvorrichtung

- 90: Montagevorrichtung
- 92: Montagemittel
- 96: Handhabungsschnittstelle

- 100: Schiebetürenanlage
- 110: Schiebetür
- 120: Rollenlaufbahn

- 300: Zubehörmodul
- 310: Modulkörper
- 312: Gegenanlagefläche

- SKR: Schwerkraftrichtung
- BA: Bewegungsachse

## Patentansprüche

1. Rollenwagen (10) für die Aufnahme einer Schiebetür (110), aufweisend ein Rollenmodul (20) zur verschiebbaren Anbringung an einer Rollenlaufbahn (120) und einen Grundkörper (30) zur Befestigung an der Schiebetür (110), **dadurch gekennzeichnet, dass** der Rollenwagen (10) für die Befestigung eines ersten Zubehörmoduls (300) von wenigstens zwei unterschiedlichen Zubehörmodulen (300) zumindest eine Zubehörvorrichtung (40) aufweist mit einer Anlagefläche (42) zur Kontaktierung einer Gegenanlagefläche (312) des ersten Zubehörmoduls (300) und wenigstens einem Zubehör-Befestigungsmittel (44) für die Befestigung des ersten Zubehörmoduls (300).

2. Rollenwagen (10) nach Anspruch 1, **dadurch gekennzeichnet, dass** die Zubehörvorrichtung (40) als Teil des Grundkörpers (30) ausgebildet ist, insbesondere die Oberfläche des Grundkörpers (30) in einem Abschnitt die Anlagefläche (42) aufweist.

3. Rollenwagen (10) nach einem der vorangegangenen Ansprüche, **dadurch gekennzeichnet, dass** der Rollenwagen (10) zumindest zwei Zubehörvorrichtungen (40) aufweist, welche symmetrisch oder im Wesentlichen symmetrisch zueinander angeordnet sind.

4. Rollenwagen (10) nach einem der vorangegangenen Ansprüche,
**dadurch gekennzeichnet, dass** der Rollenwagen (10) zumindest zwei Zubehörvorrichtungen (40) aufweist, deren Zubehör-Befestigungsmittel (44) in einem identischen oder im Wesentlichen identischen Raster angeordnet sind.

5. Rollenwagen (10) nach einem der vorangegangenen Ansprüche, **dadurch gekennzeichnet, dass** der Rollenwagen (10) zumindest zwei Zubehörvorrichtungen (40) aufweist, deren Zubehör-Befestigungsmittel (44) eine identische oder im Wesentlichen identische Befestigungsfunktion aufweisen.

6. Rollenwagen (10) nach einem der vorangegangenen Ansprüche, **dadurch gekennzeichnet, dass** die Zubehör-Befestigungsmittel (44) Langlöcher aufweisen, deren Erstreckung insbesondere entlang einer Schwerkraftrichtung (SKR) ausgebildet ist.

7. Rollenwagen (10) nach einem der vorangegangenen Ansprüche, **dadurch gekennzeichnet, dass** die Anlagefläche (42) zumindest abschnittsweise für einen Formschluss mit der Gegenanlagefläche (312) ausgebildet ist.

8. Rollenwagen (10) nach einem der vorangegangenen Ansprüche, **dadurch gekennzeichnet, dass** die zumindest eine Zubehörvorrichtung (40) ausgebildet ist für die Befestigung eines Zubehörmoduls (300) mit den Merkmalen eines der Ansprüche 10 oder 11.

9. Rollenwagen (10) nach einem der vorangegangenen Ansprüche, **dadurch gekennzeichnet, dass** an der Zubehörvorrichtung (40) ein erstes Zubehörmodul (300) von wenigstens zwei unterschiedlichen Zubehörmodulen (300) befestigt ist.

10. Zubehörmodul (300) zur Befestigung an einer Zubehörvorrichtung (40) eines Rollenwagens (10), insbesondere mit den Merkmalen eines der Ansprüche 1 bis 9, aufweisend einen Modulkörper (310) mit einer Gegenanlagefläche (312) zur Kontaktierung einer Anlagefläche (42) der Zubehörvorrichtung (40), welche für die Kontaktierung von Gegenanlageflächen (312) von wenigstens zwei unterschiedlichen Zubehörmodulen (300) ausgebildet ist, und zur Befestigung mittels wenigstens einem Zubehör-Befestigungsmittel (44).

11. Zubehörmodul (300) nach Anspruch 10, **dadurch gekennzeichnet, dass** der Modulkörper (310) wenigstens einen Funktionsabschnitt für die Ausübung zumindest einer der folgenden Funktionen aufweist:
- Umlenk- und/oder Spannfunktion eines Antriebs des Rollenwagens (10)
- Rastmöglichkeit in einer Endposition des Rollenwagens (10)
- Befestigung eines Selbstschließmechanismus
- In den Rollenwagen (10) integrierte Verriegelungsfunktion
- Positionsbestimmung des Rollenwagens (10)
- Befestigung einer mitfahrenden Sichtblende

12. Schiebetürenanlage (100), aufweisend eine Rollenlaufbahn (120) und wenigstens einen in der Rollenlaufbahn (120) verschiebbar gelagerten Rollenwagen (10) mit den Merkmalen eines der Ansprüche 1 bis 10.

13. Schiebetürenanlage (100) nach Anspruch 12, **dadurch gekennzeichnet, dass** wenigstens eine Schiebetür (110) mittels wenigstens zwei Rollenwagen (10) mit den Merkmalen eines der Ansprüche 1 bis 10 verschiebbar in der Rollenlaufbahn (120) gelagert ist.

14. Verfahren für die Befestigung eines Zubehörmoduls (300), insbesondere mit den Merkmalen eines der Ansprüche 10 oder 11, an einem Rollenwagen (10), insbesondere mit den Merkmalen eines der Ansprüche 1 bis 9, aufweisend die folgenden Schritte:
- Auswählen eines Zubehörmoduls (300) aus wenigstens zwei unterschiedlichen Zubehörmodulen (300) zur Befestigung am Rollenwagen (10),
- Kontaktieren einer Anlagefläche (42) einer Zubehörvorrichtung (40) des Rollenwagens (10) mit einer Gegenanlagefläche (312) des ausgewählten Zubehörmoduls (300),
- Befestigen des ausgewählten Zubehörmoduls (300) mittels wenigstens einem Zubehör-Befestigungsmittel (44) der Zubehörvorrichtung (40).
